# EUROPEAN PATENT APPLICATION

(11) **EP 4 835 699 A1**
(43) Date of publication of application: **04.11.2026**
(21) Application number: 25221600.7
(22) Date of filing: 08.12.2025
(51) Int. Cl.: G06F 21/53, G06F 21/60, G06F 21/57, G06F 21/72, G06F 21/74

(54) **METHOD FOR DATA PROCESSING AND RELATED DEVICE**

(30) Priority: 30.04.2025 CN 202510570979
(71) Applicant: Amlogic (Shanghai) Co., Ltd, Shanghai 201203 (CN)
(72) Inventor: ZENG, Tao, Shanghai (CN); LUO, Zhongfu, Shanghai (CN)
(74) Representative: Piotrowicz, Pawel Jan Andrzej

(57) **Abstract**

A method for data processing and related device. The method includes: calling an encryption-decryption circuit running in a trusted execution environment for first data using a program circuit running in a rich execution environment, wherein the first data is either plaintext data to be written to a storage device or ciphertext data to be read from the storage device; and acquiring the first data, performing a security processing operation on the first data, and returning second data acquired by the security processing operation to the program circuit in response to call of the program circuit, using the encryption-decryption circuit, wherein the security processing operation is an encryption operation or a decryption operation. The technical solution of the present disclosure can improve data security.

## Description

### CROSS-REFERENCE TO RELATED APPLICATIONS

This application claims priority to Chinese Patent Application No. 202510570979.4, filed on April 30, 2025, the entire disclosure of which is incorporated herein by reference.

### TECHNICAL FIELD

The present disclosure relates to the technical field of data processing, and in particular to a method for data processing and related device.

### BACKGROUND

Critical system data generally refers to important configuration data during the operating system's operation, such as environment variables (ENV) of the boot loader (uboot), system user data, hardware configurations, and parameters. This critical system data is crucial for stable system operation and the security of private data.

In recent years, with the industry's increasing emphasis on information security, some security solutions for critical system data have emerged. However, these solutions all run in rich execution environments, resulting in relatively low security.

### SUMMARY

The problem solved by the embodiments of the present disclosure is to provide a method for data processing and related device, which can improve data security.

To solve the above problem, a method for data processing is provided in the embodiments of the present disclosure, comprising:
calling an encryption-decryption circuit running in a trusted execution environment for first data using a program circuit running in a rich execution environment, wherein the first data is either plaintext data to be written to a storage device or ciphertext data to be read from the storage device; and
acquiring the first data, performing a security processing operation on the first data, and returning second data acquired by the security processing operation to the program circuit in response to call of the program circuit, using the encryption-decryption circuit, wherein the security processing operation is an encryption operation or a decryption operation.

Optionally, calling the encryption-decryption circuit running in the trusted execution environment for the first data using the program circuit running in the rich execution environment comprises: calling the encryption-decryption circuit running in the trusted execution environment for the first data using the program circuit running in the rich execution environment via a secure call interface; and
returning the second data acquired by the security processing operation to the program circuit using the encryption-decryption circuit comprises: returning the second data acquired by the security processing operation to the program circuit using the encryption-decryption circuit via the secure call interface.

Optionally, the encryption-decryption circuit comprises a shared data buffer and an encryption-decryption interface;
wherein acquiring the first data, performing the security processing operation on the first data, and returning the second data acquired by the security processing operation to the program circuit in response to the call of the program circuit, using the encryption-decryption circuit comprises: acquiring the first data and store the first data in the shared data buffer in response to the call of the program circuit using the encryption-decryption interface; performing the security processing operation on the first data acquired from the shared data buffer and writing the second data acquired by the security processing operation to the shared data buffer, using the encryption-decryption interface; and returning the second data to the program circuit using the encryption-decryption interface.

Optionally, the program circuit comprises a kernel driver circuit or a boot loader;
if the program circuit is the kernel driver circuit, before calling the encryption-decryption circuit running in the trusted execution environment for first data using the program circuit running in the rich execution environment, the method further comprises: acquiring the first data transmitted by an application running in the rich execution environment using the kernel driver circuit, wherein the first data is either plaintext data to be written to the storage device by the application or ciphertext data to be read from the storage device by the application; and
after acquiring the first data, performing the security processing operation on the first data, and returning second data acquired by the security processing operation to the program circuit in response to call of the program circuit, using the encryption-decryption circuit, the method further comprises: returning the second data to the application using the kernel driver circuit.

Optionally, the application runs in user mode and the kernel driver circuit runs in kernel mode;
wherein acquiring the first data transmitted by the application running in the rich execution environment using the kernel driver circuit comprises: acquiring the first data transmitted by the application via a system call using a file node of the kernel driver circuit; and
wherein returning the second data to the application using the kernel driver circuit comprises: transmitting the second data to the application via a system call using a file node of the kernel driver circuit.

Optionally, performing the security processing operation on the first data comprises: generating an encryption-decryption key using a symmetric encryption algorithm, and performing the security processing operation on the first data using the encryption-decryption key.

Optionally, the encryption-decryption circuit is located on a SOC chip, the program circuit is stored in a memory of the SOC chip and is executed by a processor of the SOC chip; and
wherein generating the encryption-decryption key using the symmetric encryption algorithm comprises: generating the encryption-decryption key using the symmetric encryption algorithm based on identification information of the SOC chip.

Optionally, the identification information of the SOC chip comprises at least one of a unique identifier of the SOC chip, a production identifier stored in an OTP device of the SOC chip, and a manufacturer identifier.

Optionally, the first data comprises at least one of an environment variable of a boot loader, system user data, and a system hardware configuration parameter.

Correspondingly, a device for data processing is further provided in the embodiments of the present disclosure, comprising:
one or more processors;
a memory, configured to store a program circuit; wherein the program circuit is configured to be executed by the one or more processors in a rich execution environment to execute an operation of calling an encryption-decryption circuit running in a trusted execution environment for first data, wherein the first data is either plaintext data to be written to a storage device or ciphertext data to be read from the storage device; and
the encryption-decryption circuit, executing in the trusted execution environment, configured to acquire the first data, perform a security processing operation on the first data, and return second data acquired by the security processing operation to the program circuit in response to call of the program circuit, wherein the security processing operation is an encryption operation or a decryption operation.

Correspondingly, a system for data processing is further provided in the embodiments of the present disclosure, comprising the device for data processing as described above and a storage device.

Optionally, the storage device comprises any one of an eMMC, a NAND flash memory, a NOR flash memory, and a mechanical hard disk.

Correspondingly, a computer program product is further provided in the embodiments of the present disclosure, comprising a computer program/instruction, wherein when executed by a processor, the computer program/instruction is used to implement the method for data processing as described in any embodiment above.

Correspondingly, a storage medium is further provided in the embodiments of the present disclosure, wherein the storage medium stores one or more computer instructions, wherein the one or more computer instructions are used to implement the method for data processing as described in any embodiment above.

Compared with the prior art, the technical solutions in the embodiments of the present disclosure have the advantages as follows:
The method for data processing provided in the embodiments of the present disclosure comprises: calling an encryption-decryption circuit running in a trusted execution environment for first data using a program circuit running in a rich execution environment, wherein the first data is either plaintext data to be written to a storage device or ciphertext data to be read from the storage device; and acquiring the first data, performing a security processing operation on the first data, and returning second data acquired by the security processing operation to the program circuit in response to call of the program circuit, using the encryption-decryption circuit, wherein the security processing operation is an encryption operation or a decryption operation.

The method for data processing, as provided in the embodiments of the present disclosure, performs corresponding encryption or decryption operations on the first data in the trusted execution environment in response to the call of the program circuit running in the rich execution environment using the encryption-decryption circuit, wherein the trusted execution environment is a secure environment isolated from a hardware environment, making the first data less susceptible to attacks by malicious software and thus improving the security of the first data.

### BRIEF DESCRIPTION OF THE DRAWINGS

FIG. 1 shows a schematic diagram of the framework structure of an embodiment of a system for data processing according to the present disclosure; and
FIG. 2 shows a schematic diagram of the flow of an embodiment of a method for data processing according to the present disclosure.

### DETAILED DESCRIPTION

As can be seen from the background, current security solutions for critical system data all run in rich execution environments, resulting in relatively low security.

In order to solve the technical problem, the method for data processing provided in the embodiments of the present disclosure comprises: calling an encryption-decryption circuit running in a trusted execution environment for first data using a program circuit running in a rich execution environment, wherein the first data is either plaintext data to be written to a storage device or ciphertext data to be read from the storage device; and acquiring the first data, performing a security processing operation on the first data, and returning second data acquired by the security processing operation to the program circuit in response to call of the program circuit, using the encryption-decryption circuit, wherein the security processing operation is an encryption operation or a decryption operation.

The method for data processing, as provided in the embodiments of the present disclosure, performs corresponding encryption or decryption operations on the first data in the trusted execution environment in response to the call of the program circuit running in the rich execution environment using the encryption-decryption circuit, wherein the trusted execution environment is a secure environment isolated from a hardware environment, making the first data less susceptible to attacks by malicious software and thus improving the security of the first data.

To make the above objectives, features, and advantages in the embodiments of the present disclosure more apparent and easier to understand, specific embodiments of the present disclosure are described in detail below with reference to the accompanying drawings.

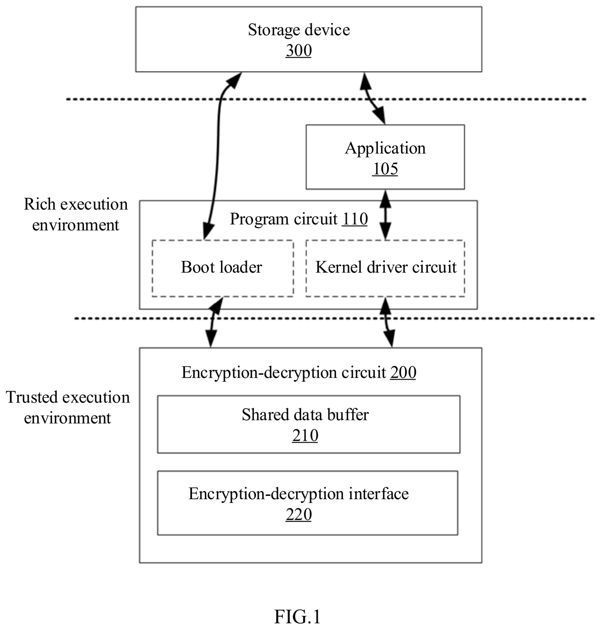

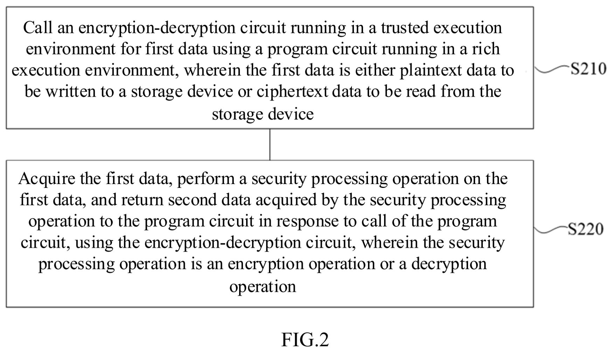

FIG. 1 shows a schematic diagram of the framework structure of an embodiment of a system for data processing according to the present disclosure, and FIG. 2 shows a schematic diagram of the flow of an embodiment of a method for data processing according to the present disclosure. Referring to FIG. 1 and FIG. 2, a method for data processing may specifically include the following steps:
Step S210: Call an encryption-decryption circuit running in a trusted execution environment for first data using a program circuit running in a rich execution environment, wherein the first data is either plaintext data to be written to a storage device or ciphertext data to be read from the storage device;
Step S220: Acquire the first data, perform a security processing operation on the first data, and return second data acquired by the security processing operation to the program circuit in response to call of the program circuit, using the encryption-decryption circuit, wherein the security processing operation is an encryption operation or a decryption operation.

Please refer to FIG. 1. In step S210, call an encryption-decryption circuit running in a trusted execution environment for first data using a program circuit running in a rich execution environment, wherein the first data is either plaintext data to be written to a storage device or ciphertext data to be read from the storage device.

Calling an encryption-decryption circuit running in a trusted execution environment for first data using a program circuit running in a rich execution environment provides a basic for subsequently acquiring the first data, performing a security processing operation on the first data, and returning second data acquired by the security processing operation to the program circuit in response to call of the program circuit, using the encryption-decryption circuit.

The device for data processing is used to run the method for data processing in embodiments of the present disclosure.

The Rich Execution Environment (REE) is an open environment provided by the device for data processing, which is vulnerable to attacks by malicious software, such as the theft of sensitive data, abuse of digital rights, and misuse of mobile payments.

The Trusted Execution Environment (TEE) provides a trusted and secure environment for the device for data processing, ensuring the security and privacy of sensitive data and preventing malicious software from obtaining or tampering with it.

In some embodiments, the device for data processing includes one or more processors (not shown), a memory (not shown), and the encryption-decryption circuit 200. The memory stores a program circuit 110 and an application 105, which can be run by the one or more processors within the REE.

The application 105 has the authority to modify sensitive system data, but because it runs in user mode, it does not have the ability to directly call the encryption-decryption circuit 200 running in the TEE via a secure call interface.

The program circuit 110 runs in kernel mode and has the ability to directly call the encryption-decryption interface 130 running in the TEE via a secure call interface, serving as a bridge between the application 105 and the encryption-decryption circuit 200.

Specifically, when the application 105 needs to encrypt first data it generates and is to be written to storage device 300, or needs to decrypt first data read from storage device 300, the first data is first transmitted to the program circuit 110 via a system invocation. Then, the program circuit 110 calls the encryption-decryption circuit 200 running in the trusted execution environment, so that the encryption-decryption circuit 200 performs encryption or decryption operations on the first data from the application.

In some embodiments, the program circuit 110 is a kernel driver circuit (not shown), and the device for data processing is used to run a Linux operating system. Accordingly, before calling the encryption-decryption circuit 200 running in the trusted execution environment for the first data using the program circuit 110 running in the rich execution environment, the step of acquiring the first data transmitted by the application 105 running in the rich execution environment using the program circuit 110 includes: acquiring the first data transmitted by the application via a system call using the file node of the kernel driver circuit.

The file node is created by the kernel driver circuit and can be accessed by the application 105 through file operations. Accordingly, the application 105 initiates a system call through the system call interface, which can write the first data to the file node of the kernel driver circuit, thereby enabling the kernel driver circuit to acquire the first data.

Meanwhile, when the application 105 makes a system call, it specifies the type of security operation to be performed on the first data, i.e., whether it is an encryption operation or a decryption operation, through the corresponding call parameters, so that the kernel driver circuit can call the encryption-decryption circuit 200 through the secure call interface for the first data from the application 105.

In some embodiments, the program circuit can also be a boot loader (U-Boot).

In embedded operating systems, there is typically no firmware program like the Basic Input Output System (BIOS). Therefore, the entire system loading and booting task is entirely performed by the boot loader. Specifically, the boot loader runs before the operating system kernel and can be used to configure system and environment variables, support loading boot image files, provide an interactive command-line interface, and has extended functionality.

Although its lifespan is relatively short, the boot loader still has the need to access/modify important system data. Unlike the application 105, the boot loader runs in kernel mode, and therefore can directly implement secure calls to the encryption-decryption circuit 200 via a secure call interface.

By using a secure call interface to securely call the encryption-decryption circuit 200, the system can switch between the rich execution environment and the trusted execution environment. This enables communication and interaction between the program circuit 110 running in the REE (such as the kernel driver circuit or the boot loader) and the encryption-decryption circuit 200 running in the TEE, respectively. Furthermore, it prevents data theft or tampering, thus improving the security and integrity of data transmission.

Please refer to FIGS. 1 and 2. In step S220, acquire the first data, perform a security processing operation on the first data, and return second data acquired by the security processing operation to the program circuit in response to call of the program circuit, using the encryption-decryption circuit, wherein the security processing operation is an encryption operation or a decryption operation.

The encryption-decryption circuit 200 runs in the TEE. By using the encryption-decryption circuit 200 to encrypt and decrypt the first data from the application or boot loader, it can prevent sensitive data from being stolen and attacked by malicious software, thereby improving the security of the encryption and decryption operations on the first data. Furthermore, the encryption-decryption circuit 200 is a hardware encryption-decryption circuit, which helps to further improve the speed of encryption and decryption operations on the first data.

In some embodiments, the encryption-decryption circuit 200 includes a shared data buffer 210 and an encryption-decryption interface 220.

Accordingly, the steps of acquiring the first data, performing the security processing operation on the first data, and returning the second data acquired by the security processing operation to the program circuit 110 in response to the call of the program circuit 110, using the encryption-decryption circuit 200, include: acquiring the first data and store the first data in the shared data buffer 210 in response to the call of the program circuit 110 using the encryption-decryption interface 220; performing the security processing operation on the first data acquired from the shared data buffer 210 and writing the second data acquired by the security processing operation to the shared data buffer 210, using the encryption-decryption interface 220; and returning the second data to the program circuit 110 using the encryption-decryption interface 220.

The shared data buffer 210 serves as a temporary storage space for the first data and the second data acquired by the security processing operation on the first data, providing a data interaction buffer between the trusted execution environment and the rich execution environment.

The encryption-decryption interface 220, as the actual execution unit for performing encryption or decryption operations, is used to obtain the first data from the shared data buffer 210, perform corresponding encryption or decryption operations on the obtained first data, and rewrite the second data obtained by the encryption or decryption operation back into the shared data buffer 210.

When the program circuit 110 calls the encryption-decryption circuit 200, the corresponding call parameters indicate the size and memory address of the first data block. This allows the encryption-decryption interface 220 to read the first data from the program circuit 110 via a secure call interface, based on the size and memory address of the first data block, and store the read first data in the shared buffer 210.

Simultaneously, when the program circuit 110 calls the encryption-decryption circuit 200, the corresponding call parameters also indicate the type of security processing operation. This allows the encryption-decryption interface 220 to perform corresponding encryption or decryption operations on the first data based on the type of security processing operation indicated by the call parameters.

In some embodiments, the step of performing the security processing operation on the first data using the encryption-decryption interface 220 includes: generating an encryption-decryption key using a symmetric encryption algorithm, and performing the security processing operation on the first data using the encryption-decryption key.

It should be noted that generating an encryption-decryption key using a symmetric encryption algorithm, and performing the security processing operation on the first data using the encryption-decryption key, means that the encryption-decryption key is only generated when encryption or decryption of the first data is required. Furthermore, the encryption-decryption key is not stored in plaintext to avoid hacker attacks using decompiled firmware, thus improving data security.

Using a symmetric cryptographic algorithm to generate the encryption-decryption key means that the same key is used for encryption and decryption, resulting in fast computation speed, which helps improve the speed of security processing operations.

In some embodiments, the symmetric cryptographic algorithm is the Advanced Encryption Standard (AES) algorithm. AES is a symmetric cryptographic algorithm with advantages such as fast computation speed and high security level, which helps improve the speed of security processing operations at the encryption-decryption interface and contributes to improved data security.

In some embodiments, the device for data processing and storage device 300 are located on a SOC chip. Accordingly, the encryption-decryption key is generated using a symmetric cryptographic algorithm based on the identification information of the SOC chip.

Based on the identification information of the SOC chip, the encryption-decryption key is generated using a symmetric cryptographic algorithm. This encryption-decryption key relies on the inherent characteristics of the SOC chip, ensuring that different encryption-decryption circuits 200 on different SOC chips use different keys. This can prevent the leakage of encryption-decryption keys, increase the difficulty of cracking encrypted data stored in the storage device 300, and further improve data security.

In some embodiments, the identification information of the SOC chip is a unique identifier for the SOC chip. In some embodiments, the identification information of the SOC chip can also be identification information such as a production identifier or manufacturer identifier stored in the One Time Programmable (OTP) device of the SOC chip, used to uniquely identify the SOC chip. Those skilled in the art can select such information according to actual needs, and no limitation is made herein.

In some embodiments, after the encryption-decryption circuit 200 performs a security processing operation on the first data, the result of the security processing operation, i.e., the second data, is returned from the shared data buffer 210 to the program circuit 110 via a secure call interface, so that the program circuit 110 can perform subsequent operations.

Specifically, when the first data is plaintext data to be written to storage device 300 by application 105, and the second data is correspondingly ciphertext data, after the encryption-decryption circuit 200 returns the second data to the kernel driver circuit through a secure call interface, the kernel driver circuit transmits the second data to application 105 via a system call, thereby enabling application 105 to write the second data to storage device 300.

When the first data is ciphertext data read by application 105 from storage device 300, and the second data is correspondingly plaintext data, after the encryption-decryption circuit 200 returns the second data to the kernel driver circuit through a secure call interface, the kernel driver circuit transmits the second data to application 105 via a system call, thereby enabling application 105 to obtain the second data and perform corresponding operations on it, such as modification.

When the first data is plaintext data from the boot loader, and the second data is correspondingly ciphertext data, then after the encryption-decryption circuit 200 returns the second data to the boot loader via a secure call interface, the boot loader writes the second data to the storage device 300.

When the first data is ciphertext data read by the boot loader from the storage device 300, and the second data is correspondingly plaintext data, then after the encryption-decryption circuit 200 returns the second data to the boot loader via a secure call, the boot loader can perform corresponding operations on the second data.

By using the encryption-decryption circuit 200 to encrypt plaintext data to be written to the storage device 300 and decrypt ciphertext data read from the storage device 300, without relying on the storage device 300's own hardware encryption-decryption capabilities, this approach is applicable to various types of storage devices, such as Embedded Multi Media Card (eMMC), Not AND (NAND) flash memory, Not OR (NOR) flash memory, and hard disk drives, demonstrating broad applicability.

In summary, the method for data processing provided by embodiments of the present disclosure transmits sensitive data to be written to or read from the storage device by the application or boot loader to an encryption-decryption circuit running in a trusted execution environment for encryption or decryption. The trusted execution environment is a hardware-isolated operating environment with a high level of security, which can avoid attacks by malicious software and thus helps to improve data security.

Accordingly, embodiments of the present disclosure also provide a device for data processing. In some embodiments, the device for data processing includes one or more processors, a memory, and an encryption-decryption circuit. Specifically, as shown in FIG. 1, the device for data processing can be configured to execute the method for data processing provided in the embodiments of this disclosure. Alternatively, in some embodiments, other functional modules can be used to execute the aforementioned method for data processing. For a detailed description of the method for data processing in the foregoing sections, it will not be repeated here.

Correspondingly, embodiments of the present disclosure also provide a system for data processing, which may include the device for data processing provided in the embodiments of the present disclosure and storage device, as shown in FIG. 1, and will not be repeated here.

Correspondingly, embodiments of the present disclosure also provide a computer program product, including a computer program/instructions, which, when executed by a processor, are used to implement the method for data processing described in the embodiments of the present disclosure.

Embodiments of the present disclosure also provide a storage medium storing one or more computer instructions, which are used to implement the method for data processing provided in the foregoing embodiments.

The above-mentioned embodiments of the present disclosure are a combination of elements and features of the present disclosure. Unless otherwise mentioned, the elements or features may be regarded as optional. Each element or feature may be practiced without being combined with other elements or features. In addition, the embodiments of the present disclosure can be constructed by combining some elements and/or features. The order of operations described in the embodiments of the present disclosure can be rearranged. Some structures of any embodiment may be included in another embodiment and may be replaced by corresponding structures of another embodiment. It is obvious to those skilled in the art that claims in the attached claims that do not have an explicit reference relationship with each other may be combined into embodiments of the present disclosure, or may be included as new claims in amendments after the filing of this application.

The embodiments of the present disclosure may be implemented by various means such as hardware, firmware, software, or a combination thereof. In a hardware configuration, the method according to the exemplary embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, the embodiments of the present disclosure may be implemented in the form of modules, processes, functions, etc. The software code may be stored in a memory unit and executed by a processor. The memory unit is located inside or outside the processor and may send data to and receive data from the processor via various known means.

The above description of the disclosed embodiments enables those skilled in the art to implement or use the present disclosure. Various modifications to these embodiments will be apparent to those skilled in the art, and the general principles defined herein may be implemented in other embodiments without departing from the spirit or scope of the present disclosure. Thus, the present disclosure will not be limited to the embodiments shown herein but will be accorded the widest scope consistent with the principles and novel features disclosed herein.

Although disclosed as above, the present disclosure is not limited to the foregoing description. A person skilled in the art can make various changes and modifications without departing from the spirit and the scope of the present disclosure. Thus, the scope of protection of the present disclosure should be subject to the scope defined by the claims.

## Claims

1. A method for data processing, comprising:
calling an encryption-decryption circuit running in a trusted execution environment for first data using a program circuit running in a rich execution environment, wherein the first data is either plaintext data to be written to a storage device or ciphertext data to be read from the storage device; and
acquiring the first data, performing a security processing operation on the first data, and returning second data acquired by the security processing operation to the program circuit in response to call of the program circuit, using the encryption-decryption circuit, wherein the security processing operation is an encryption operation or a decryption operation.

2. The method for data processing according to claim 1, wherein the program circuit runs in kernel mode;
wherein calling the encryption-decryption circuit running in the trusted execution environment for the first data using the program circuit running in the rich execution environment comprises: calling the encryption-decryption circuit running in the trusted execution environment for the first data using the program circuit running in the rich execution environment via a secure call interface; and
wherein returning the second data acquired by the security processing operation to the program circuit using the encryption-decryption circuit comprises: returning the second data acquired by the security processing operation to the program circuit using the encryption-decryption circuit via the secure call interface.

3. The method for data processing according to claim 1, wherein the encryption-decryption circuit comprises a shared data buffer and an encryption-decryption interface;
wherein acquiring the first data, performing the security processing operation on the first data, and returning the second data acquired by the security processing operation to the program circuit in response to the call of the program circuit, using the encryption-decryption circuit comprises: acquiring the first data and store the first data in the shared data buffer in response to the call of the program circuit using the encryption-decryption interface; performing the security processing operation on the first data acquired from the shared data buffer and writing the second data acquired by the security processing operation to the shared data buffer, using the encryption-decryption interface; and returning the second data to the program circuit using the encryption-decryption interface.

4. The method for data processing according to any one of claims 1 to 3, wherein the program circuit comprises a kernel driver circuit or a boot loader;
if the program circuit is the kernel driver circuit, before calling the encryption-decryption circuit running in the trusted execution environment for first data using the program circuit running in the rich execution environment, the method further comprises: acquiring the first data transmitted by an application running in the rich execution environment using the kernel driver circuit, wherein the first data is either plaintext data to be written to the storage device by the application or ciphertext data to be read from the storage device by the application; and
after acquiring the first data, performing the security processing operation on the first data, and returning second data acquired by the security processing operation to the program circuit in response to call of the program circuit, using the encryption-decryption circuit, the method further comprises: returning the second data to the application using the kernel driver circuit.

5. The method for data processing according to claim 4, wherein the application runs in user mode and the kernel driver circuit runs in kernel mode;
wherein acquiring the first data transmitted by the application running in the rich execution environment using the kernel driver circuit comprises: acquiring the first data transmitted by the application via a system call using a file node of the kernel driver circuit; and
wherein returning the second data to the application using the kernel driver circuit comprises: transmitting the second data to the application via a system call using a file node of the kernel driver circuit.

6. The method for data processing according to claim 1, wherein performing the security processing operation on the first data comprises: generating an encryption-decryption key using a symmetric encryption algorithm, and performing the security processing operation on the first data using the encryption-decryption key.

7. The method for data processing according to claim 6, wherein the encryption-decryption circuit is located on a SOC chip, the program circuit is stored in a memory of the SOC chip and is executed by a processor of the SOC chip; and
wherein generating the encryption-decryption key using the symmetric encryption algorithm comprises: generating the encryption-decryption key using the symmetric encryption algorithm based on identification information of the SOC chip.

8. The method for data processing according to claim 7, wherein the identification information of the SOC chip comprises at least one of a unique identifier of the SOC chip, a production identifier stored in an OTP device of the SOC chip, and a manufacturer identifier.

9. The method for data processing according to claim 1, wherein the first data comprises at least one of an environment variable of a boot loader, system user data, and a system hardware configuration parameter.

10. A device for data processing, comprising:
one or more processors;
a memory, configured to store a program circuit; wherein the program circuit is configured to be executed by the one or more processors in a rich execution environment to execute an operation of calling an encryption-decryption circuit running in a trusted execution environment for first data, wherein the first data is either plaintext data to be written to a storage device or ciphertext data to be read from the storage device; and
the encryption-decryption circuit, executing in the trusted execution environment, configured to acquire the first data, perform a security processing operation on the first data, and return second data acquired by the security processing operation to the program circuit in response to call of the program circuit, wherein the security processing operation is an encryption operation or a decryption operation.

11. A system for data processing, comprising the device for data processing according to claim 10 and a storage device.

12. The system for data processing according to claim 11, wherein the storage device comprises any one of an eMMC, a NAND flash memory, a NOR flash memory, and a mechanical hard disk.

13. A computer program product, comprising a computer program/instruction, wherein when executed by a processor, the computer program/instruction is used to implement the method for data processing according to any one of claims 1 to 9.

14. A storage medium, wherein the storage medium stores one or more computer instructions, wherein the one or more computer instructions are used to implement the method for data processing according to any one of claims 1 to 9.

## Amended claims

### Amended claims in accordance with Rule 137(2) EPC.

1. A method for data processing, comprising:
calling an encryption-decryption circuit (200) running in a trusted execution environment for first data using a program circuit (110) running in a rich execution environment, wherein the first data is either plaintext data to be written to a storage device (300) or ciphertext data to be read from the storage device; and
acquiring the first data, performing a security processing operation on the first data, and returning second data acquired by the security processing operation to the program circuit in response to call of the program circuit, using the encryption-decryption circuit, wherein the security processing operation is an encryption operation or a decryption operation.

2. The method for data processing according to claim 1, wherein the program circuit (110) runs in kernel mode;
wherein calling the encryption-decryption circuit (200) running in the trusted execution environment for the first data using the program circuit running in the rich execution environment comprises: calling the encryption-decryption circuit running in the trusted execution environment for the first data using the program circuit running in the rich execution environment via a secure call interface; and
wherein returning the second data acquired by the security processing operation to the program circuit using the encryption-decryption circuit comprises: returning the second data acquired by the security processing operation to the program circuit using the encryption-decryption circuit via the secure call interface.

3. The method for data processing according to claim 1, wherein the encryption-decryption circuit (200) comprises a shared data buffer (210) and an encryption-decryption interface (220);
wherein acquiring the first data, performing the security processing operation on the first data, and returning the second data acquired by the security processing operation to the program circuit (110) in response to the call of the program circuit, using the encryption-decryption circuit comprises: acquiring the first data and store the first data in the shared data buffer in response to the call of the program circuit using the encryption-decryption interface; performing the security processing operation on the first data acquired from the shared data buffer and writing the second data acquired by the security processing operation to the shared data buffer, using the encryption-decryption interface; and returning the second data to the program circuit using the encryption-decryption interface.

4. The method for data processing according to any one of claims 1 to 3, wherein the program circuit (110) comprises a kernel driver circuit or a boot loader;
if the program circuit is the kernel driver circuit, before calling the encryption-decryption circuit (200) running in the trusted execution environment for first data using the program circuit running in the rich execution environment, the method further comprises: acquiring the first data transmitted by an application (105) running in the rich execution environment using the kernel driver circuit, wherein the first data is either plaintext data to be written to the storage device (300) by the application or ciphertext data to be read from the storage device by the application; and
after acquiring the first data, performing the security processing operation on the first data, and returning second data acquired by the security processing operation to the program circuit in response to call of the program circuit, using the encryption-decryption circuit, the method further comprises: returning the second data to the application using the kernel driver circuit.

5. The method for data processing according to claim 4, wherein the application (105) runs in user mode and the kernel driver circuit runs in kernel mode;
wherein acquiring the first data transmitted by the application running in the rich execution environment using the kernel driver circuit comprises: acquiring the first data transmitted by the application via a system call using a file node of the kernel driver circuit; and
wherein returning the second data to the application using the kernel driver circuit comprises: transmitting the second data to the application via a system call using a file node of the kernel driver circuit.

6. The method for data processing according to claim 1, wherein performing the security processing operation on the first data comprises: generating an encryption-decryption key using a symmetric encryption algorithm, and performing the security processing operation on the first data using the encryption-decryption key.

7. The method for data processing according to claim 6, wherein the encryption-decryption circuit (200 is located on a SOC chip, the program circuit (110) is stored in a memory of the SOC chip and is executed by a processor of the SOC chip; and wherein generating the encryption-decryption key using the symmetric encryption algorithm comprises: generating the encryption-decryption key using the symmetric encryption algorithm based on identification information of the SOC chip.

8. The method for data processing according to claim 7, wherein the identification information of the SOC chip comprises at least one of a unique identifier of the SOC chip, a production identifier stored in an OTP device of the SOC chip, and a manufacturer identifier.

9. The method for data processing according to claim 1, wherein the first data comprises at least one of an environment variable of a boot loader, system user data, and a system hardware configuration parameter.

10. A device for data processing, comprising:
one or more processors;
a memory, configured to store a program circuit (110); wherein the program circuit is configured to be executed by the one or more processors in a rich execution environment to execute an operation of calling an encryption-decryption circuit (200) running in a trusted execution environment for first data, wherein the first data is either plaintext data to be written to a storage device (300) or ciphertext data to be read from the storage device; and
the encryption-decryption circuit, executing in the trusted execution environment, configured to acquire the first data, perform a security processing operation on the first data, and return second data acquired by the security processing operation to the program circuit in response to call of the program circuit, wherein the security processing operation is an encryption operation or a decryption operation.

11. A system for data processing, comprising the device for data processing according to claim 10 and a storage device (300).

12. The system for data processing according to claim 11, wherein the storage device (300) comprises any one of an eMMC, a NAND flash memory, a NOR flash memory, and a mechanical hard disk.

13. A computer program product, comprising a computer program/instruction, wherein when executed by a processor, the computer program/instruction is used to implement the method for data processing according to any one of claims 1 to 9.

14. A storage medium, wherein the storage medium stores one or more computer instructions, wherein the one or more computer instructions are used to implement the method for data processing according to any one of claims 1 to 9.
